# EUROPEAN PATENT APPLICATION

(11) **EP 4 550 559 A1**
(43) Date of publication of application: **07.05.2025**
(21) Application number: 22948962.0
(22) Date of filing: 28.09.2022
(51) Int. Cl.: H01M 50/451

(54) **COMPOSITE SEPARATOR, PREPARATION METHOD THEREFOR, AND LITHIUM-SULFUR BATTERY CONTAINING COMPOSITE SEPARATOR**

(30) Priority: 28.06.2022 CN 202210742774; 28.06.2022 CN 202210742846
(71) Applicant: Shanghai Research Institute of Petrochemical Technology, SINOPEC, Shanghai 201208 (CN)
(72) Inventor: YANG, Weimin, Shanghai 201208 (CN); WANG, Xiaofei, Shanghai 201208 (CN); LAN, Dawei, Shanghai 201208 (CN); LI, Jun, Shanghai 201208 (CN); WANG, Zhendong, Shanghai 201208 (CN); XUE, Haoliang, Shanghai 201208 (CN); ZHANG, Daoming, Shanghai 201208 (CN); ZHOU, Sifei, Shanghai 201208 (CN)
(74) Representative: karo IP
(86) International application number: PCT/CN2022/121937
(87) International publication number: WO 2024/000873

(57) **Abstract**

The present disclosure relates to a composite separator and a preparation method therefor, as well as a lithium-sulfur battery containing the composite separator. The composite separator comprises a polymer substrate film and a composite layer disposed on the surface of the polymer substrate film, wherein the composite layer comprises a molecular sieve and a conductive carbon material, wherein the molecular sieve contains cobalt and optionally lithium. As compared with the separators in the prior art, the composite separator in accordance with the present disclosure comprises a composite layer on the surface thereof, wherein the composite layer comprises a molecular sieve containing cobalt and optionally lithium, which can greatly improve the rate performance and cycle stability of lithium-sulfur batteries.

## Description

### Technical field

The present disclosure relates to technical field of battery separators, and particularly relates to a composite separator and a preparation method therefor, as well as a lithium-sulfur battery containing the composite separator.

### Background

With the rapid development of science and technology, lithium-ion batteries are unable to meet the demand for batteries with higher energy density in new energy electric vehicles and large-capacity energy storage systems due to the low theoretical specific capacity of their cathode materials. Lithium-sulfur batteries have relative high theoretical specific capacity (1675 mAh/g) and theoretical energy density (2600 Wh/kg), and are a promising alternative to lithium-ion batteries. They have become the research focus of the next generation of high specific energy secondary batteries. In addition, sulfur, the active material of their cathode materials, has advantages such as abundant natural resources, low price, environmental friendliness and the like.

However, the practical application of lithium-sulfur batteries at present may still face many challenges. Among others, the "shuttle effect", a side reaction inside the batteries, may be the biggest obstacle limiting their application. Specifically, the shuttle effect is such an effect that lithium-sulfur batteries may produce a series of sulfur-containing intermediates during the charge and discharge process, wherein long-chain polysulfides (Li₂Sₓ, 2<x≤8) are easily soluble in electrolyte, and, under the action of concentration gradient and electric field, pass through the separator to undergo a chemical side reaction with the lithium anode, resulting in loss of active materials and increased internal resistance in the battery, thereby leading to reduced battery capacity and decreased cycling performance. In addition, the electrochemical reaction process in lithium-sulfur batteries may involve multi-step solid-liquid conversion, and sulfur and the final discharge product lithium sulfide may have poor electronic conductivity. Therefore, the kinetics of polysulfide conversion is slow, and the rate performance of the batteries is poor.

At present, it has been proposed in the art to use molecular sieves in modifying conventional separators to inhibit the shuttle effect in lithium-sulfur batteries, see for example CN107546356A and CN103490027A. They use the physical barrier effect of molecular sieves such as ZSM-5, SAPO-34, 3A, 13X and the like to limit the migration and diffusion of Li₂Sₓ in the electrolyte to a certain degree, thereby improving battery performances.

In order to make (lithium-sulfur) batteries be able to meet the demand for batteries with higher energy density in new energy electric vehicles and large-capacity energy storage systems, there is still a need to develop battery separators with further improved performances.

### Summary of the invention

The present disclosure is to address the problems of poor battery rate performance, low battery capacity and poor cycle performance in the prior art. The present inventors found that, by using a molecular sieve containing cobalt and optionally lithium in a lithium-sulfur battery separator, the performance of the battery may be further improved, thereby meeting the above-mentioned demands in the prior art. Therefore, provided is a composite separator, which comprises a composite layer of a molecular sieve containing cobalt and optionally lithium. The composite separator in accordance with the present disclosure may improve the rate performance and cycle stability of the battery. Further provided in the present disclosure are a method for preparing the composite separator and a lithium-sulfur battery containing the composite separator.

In the first aspect, provided in the present disclosure is a composite separator comprising a polymer substrate film and a composite layer disposed on the surface of the polymer substrate film, wherein the composite layer comprises a molecular sieve and a conductive carbon material, wherein the molecular sieve contains cobalt.

In the second aspect, provided in the present disclosure is a method for preparing the above composite separator, comprising the steps of:
(1) mixing a molecular sieve and a conductive carbon material to obtain a mixture, wherein the molecular sieve contains cobalt;
(2) dispersing the mixture and a binder in a solvent to obtain a coating slurry;
(3) coating the coating slurry on the surface of a polymer substrate film, and then removing the solvent, to obtain the composite separator.

In the third aspect, provided in the present disclosure is a use of the above composite separator in lithium-sulfur batteries.

In the fourth aspect, provided in the present disclosure is a lithium-sulfur battery comprising a cathode, an anode and the above composite separator between the cathode and the anode.

The present disclosure may include the following items.
1. A molecular sieve modified separator, characterized in that, the separator comprises a polymer substrate film and a composite layer of a cobalt doped molecular sieve/a conductive carbon material disposed on the surface of the polymer substrate film.
2. The separator of item 1, wherein
   the composite layer of the cobalt doped molecular sieve/the conductive carbon material has a thickness of 5-50 µm, preferably 10-40 µm; and/or
   the conductive carbon material and the cobalt doped molecular sieve in the composite layer of the cobalt doped molecular sieve/the conductive carbon material are in a mass ratio of 1:(1-9), preferably 1:(2-9).
3. The separator of item 1 or 2, wherein
   the cobalt doped molecular sieve has a chemical composition of aCo• bM₂O•ySiO₂•zAl₂O₃; preferably, the cobalt doped molecular sieve is at least one selected from the group consisting of MFI, MWW, GIS, BEC, FAU and MOR, more preferably, the cobalt doped molecular sieve is at least one of MFI, MWW and GIS;
   wherein 0.02≤a/y≤0.2, 0.01≤b/y≤0.2, 10≤y/z≤50; M is an alkali metal element of Group IA, preferably one or more selected from the group consisting of Na, K and Li;
   preferably, the cobalt doped molecular sieve is a cobalt doped lithiated molecular sieve which has a chemical composition of aCo•bLi₂O•ySiO₂• zAl₂O₃, wherein 0.02≤a/y≤0.2, 0.01≤b/y≤0.2, 10≤y/z≤50.
4. The separator of any one of items 1-3, wherein
   the material of the polymer substrate film is at least one of polyethylene, polypropylene, polyimide, polyacrylonitrile, polyethylene terephthalate, polytetrafluoroethylene and polyvinylidene fluoride, preferably polyethylene and/or polypropylene; and/or
   the conductive carbon material is at least one of graphene, graphene oxide, reduced graphene oxide, carbon nanotubes, carbon nanofibers, acetylene black, Super P and Ketjen black, preferably at least one of graphene, graphene oxide and reduced graphene oxide.
5. A method for preparing the molecular sieve modified separator of any one of items 1-4, characterized in that the method comprises the steps of:
   (1) grinding and mixing a cobalt doped molecular sieve and a conductive carbon material to obtain a mixture of the cobalt doped molecular sieve and the conductive carbon material;
   (2) dispersing the mixture of the cobalt doped molecular sieve and the conductive carbon material and a binder in a solvent to obtain a coating slurry;
   (3) coating the coating slurry on the surface of a polymer substrate membrane, and then removing the solvent, to obtain the molecular sieve modified separator.
6. The method of item 5, wherein
   the cobalt doped molecular sieve is prepared by a method comprising the step of: adding a cobalt ion solution to a Na-type molecular sieve, and subjecting to drying and reducing, to obtain the cobalt doped molecular sieve;
   preferably, the cobalt doped molecular sieve is a cobalt doped lithiated molecular sieve, which is prepared by a method comprising the steps of:
      S1, exchanging a Na-type molecular sieve with a lithium ion solution, and subjecting to washing and drying, to obtain a precursor I;
      S2, adding a cobalt ion solution to the precursor I, and subjecting to drying and reducing, to obtain the cobalt doped lithiated molecular sieve;

      wherein, preferably,
      the lithium ion solution in S1 is at least one of a lithium chloride solution, a lithium sulfate solution, and a lithium nitrate solution;
      the exchanging in S1 is operated at conditions including: a temperature of 40- 100°C, and a liquid-to-solid ratio of 10-50;
      the Na-type molecular sieve has a chemical composition of bNa₂O• ySiO₂•zAl₂O₃, wherein 0.01≤b/y≤0.2, 10≤y/z≤50; preferably, the Na-type molecular sieve has at least one topological structure selected from the group consisting of MFI, MWW, GIS, BEC, FAU and MOR;
      the cobalt ion solution is at least one of cobalt chloride solution, cobalt nitrate solution, cobalt sulfate solution and cobalt acetate solution;
      the reducing is operated at conditions including: under a hydrogen atmosphere, at a reduction temperature of 600-750°C, and for a reduction time of 1-4h.
7. The method of item 5 or 6, wherein the solvent in step (2) is at least one selected from the group consisting of deionized water, anhydrous ethanol, N,N-dimethylacetamide, N,N-dimethylformamide, dimethyl sulfoxide and N-methylpyrrolidone, preferably N-methylpyrrolidone.
8. The method of any one of items 5-7, wherein the binder in step (2) is at least one of polyvinyl alcohol, carboxymethyl cellulose, polyvinylidene fluoride, polytetrafluoroethylene, polyvinyl pyrrolidone, styrene-butadiene rubber and polyacrylate, preferably polyvinylidene fluoride.
9. The method of any one of items 5-8, wherein the coating in step (3) is at least one of casting, blade coating, spray coating and spin coating, preferably blade coating.
10. Use of the molecular sieve modified separator of any one of items 1-4 in lithium-sulfur batteries.

The present disclosure may further include the following items.
1. A lithiated molecular sieve modified separator, characterized in that, the separator comprises a composite layer of a lithiated molecular sieve/a conductive carbon material and a polymer substrate film, wherein the composite layer of the lithiated molecular sieve/the conductive carbon material is disposed on the surface of the polymer substrate film.
2. The lithiated molecular sieve modified separator of item 1, wherein the lithiated molecular sieve includes at least one of a lithiated MFI molecular sieve, a lithiated MWW molecular sieve, a lithiated GIS molecular sieve, a lithiated BEC molecular sieve, a lithiated FAU molecular sieve and a lithiated MOR molecular sieve, preferably at least one of a lithiated MFI molecular sieve, a lithiated MWW molecular sieve and a lithiated GIS molecular sieve.
3. The lithiated molecular sieve modified separator of item 1 or 2, wherein the material of the polymer substrate film is at least one of polyethylene, polypropylene, polyimide, polyacrylonitrile, polyethylene terephthalate, polytetrafluoroethylene and polyvinylidene fluoride, preferably polyethylene and/or polypropylene.
4. The lithiated molecular sieve modified separator of any one of items 1-3, wherein the composite layer of the lithiated molecular sieve/the conductive carbon material has a thickness of 2-40 µm, preferably 5-25 µm.
5. The lithiated molecular sieve modified separator of any one of items 1-4, wherein
   the conductive carbon material and the lithiated molecular sieve in the composite layer of the lithiated molecular sieve/the conductive carbon material are in a mass ratio of 1:(1-9), preferably 1:(2-9); and/or
   the lithiated molecular sieve has a chemical composition of xLi₂O• ySiO₂•zAl₂O₃, wherein 0.01≤x/y≤0.2, 10≤y/z≤50.
6. The lithiated molecular sieve modified separator of any one of items 1-5, wherein the conductive carbon material is at least one of graphene, graphene oxide, reduced graphene oxide, carbon nanotubes, carbon nanofibers, acetylene black, Super P and Ketjen black, preferably at least one of graphene, graphene oxide and reduced graphene oxide.
7. A method for preparing the lithiated molecular sieve modified separator of any one of items 1-6, characterized in that, the method comprises the steps of:
   (1) grinding and mixing a lithiated molecular sieve and a conductive carbon material to obtain a mixture of the lithiated molecular sieve and the conductive carbon material;
   (2) dispersing the mixture of the lithiated molecular sieve and the conductive carbon material and a binder in a solvent to obtain a coating slurry;
   (3) coating the coating slurry on the surface of a polymer substrate membrane, and then removing the solvent, to obtain the lithiated molecular sieve modified separator.
8. The method of item 7, wherein
   in step (2), the solvent is at least one selected from the group consisting of deionized water, anhydrous ethanol, N,N-dimethylacetamide, N,N-dimethylformamide, dimethyl sulfoxide and N-methylpyrrolidone, preferably N-methylpyrrolidone; and/or
   the binder is at least one of polyvinyl alcohol, polytetrafluoroethylene, polyvinyl pyrrolidone, carboxymethyl cellulose, styrene-butadiene rubber, polyvinylidene fluoride, and polyacrylate, preferably polyvinylidene fluoride;
      and/or
   the coating in step (3) is at least one of casting, blade coating, spray coating and spin coating, preferably blade coating;
      and/or
   the lithiated molecular sieve is prepared by a method comprising the step of: exchanging a Na-type molecular sieve with a lithium ion solution, and subjecting to washing and drying, to obtain a Li-type molecular sieve;
   wherein,
   the Na-type molecular sieve has a chemical composition of xNa₂O• ySiO₂•zAl₂O₃, wherein 0.01≤x/y≤0.2, 10≤y/z≤50; preferably, the Na-type molecular sieve is at least one selected from the group consisting of an MFI molecular sieve, an MWW molecular sieve, a GIS molecular sieve, a BEC molecular sieve, an FAU molecular sieve and an MOR molecular sieve;
   the lithium ion solution is at least one selected from the group consisting of a lithium chloride solution, a lithium sulfate solution, and a lithium nitrate solution;
   the exchanging is operated at conditions including: a temperature of 40-100°C, and a liquid-to-solid ratio of 10-50.
9. Use of the lithiated molecular sieve modified separator of any one of items 1-8 in lithium-sulfur batteries.
10. A lithium-sulfur battery, characterized in that, the lithium-sulfur battery comprises: a cathode shell, a cathode sheet, a separator, a lithium sheet, a nickel foam, and an anode shell, wherein the separator is the lithiated molecular sieve modified separator of any one of items 1-6.

The present disclosure may have the following advantages.

The method for preparing the composite separator in accordance with the present disclosure is simple and has little adverse effect on the energy density of the battery.

The composite separator in accordance with the present disclosure comprises a molecular sieve containing cobalt and optionally lithium in the composite layer. When used in a lithium-sulfur battery, the pore structure of the molecular sieve can effectively limit the migration and diffusion of Li₂Sₓ via physical barrier effects, thereby reducing side reactions inside the battery. The molecular sieve in accordance with the present disclosure contains cobalt. The introduced cobalt can not only improve the conductivity of the cathode side of the separator, but also serve as an active site to enhance the kinetics of the conversion of polysulfides. In the case where the molecular sieve further contains lithium, the introduced lithium can provide a large number of sites for adsorbing and transferring lithium ions during the battery cycles, thereby improving the lithium ion transfer performance of the separator. More importantly, when the molecular sieve contains both lithium and cobalt, a synergistic effect is achieved in the resulting composite separator, which can greatly improve the rate performance and cycle stability of the lithium-sulfur battery.

### Description of the drawings

Fig. 1 is a scanning electron microscope image of the composite separator obtained in Example 2-1;
Fig. 2 is the charge and discharge curves of the lithium-sulfur battery sample obtained in Example 2-1 at different current densities.

### Detailed description

It should be understood that the endpoints and any values in the ranges disclosed herein are not limited to the precise range or value, but to encompass values close to those ranges or values. For ranges of values, it is possible to combine between the endpoints of each of the ranges, between the endpoints of each of the ranges and the individual points, and between the individual points to give one or more new ranges of values as if these ranges of values are specifically disclosed herein. Other than in the examples, all numerical values of parameters in this specification are to be understood as being modified in all instances by the term "about" whether or not "about" actually appears before the numerical value.

Provided in the present disclosure is a composite separator, comprising a polymer substrate film and a composite layer disposed on the surface of the polymer substrate film, wherein the composite layer comprises a molecular sieve and a conductive carbon material, wherein the molecular sieve contains cobalt. In one embodiment, cobalt is present in the molecular sieve in an amount of 1-30 wt%, preferably 1-15 wt%, more preferably 2-7 wt%, on element cobalt basis, and based on the total weight of cobalt and the molecular sieve.

In one embodiment, the molecular sieve may further contain lithium. Preferably, lithium is present in the molecular sieve in an amount of 0.1-5 wt%, preferably 0.2-3 wt%, more preferably 0.5-2.5 wt%, on lithium ion basis, and based on the total weight of lithium and the molecular sieve.

In one embodiment, the molecular sieve may have at least one topological structure selected from the group consisting of MFI, MWW, GIS, BEC, FAU and MOR, preferably at least one topological structure selected from the group consisting of MFI, MWW and GIS.

There is no limitation on the thickness of the composite layer in the present disclosure. In one embodiment, the composite layer may have a thickness of 5-50 µm, preferably 10-40 µm.

There is no limitation on the mass ratio of the conductive carbon material to the molecular sieve in the composite layer in the present disclosure. In one embodiment, the conductive carbon material and the molecular sieve in the composite layer are in a mass ratio of 1:(1-9), preferably 1:(2-9), for example, 1:1, 1:2, 1:4, 1:6, 1:8, 1:9.

The material of the polymer substrate film may be those commonly used in the art. In one embodiment, the material of the polymer substrate film is at least one of polyethylene, polypropylene, polyimide, polyacrylonitrile, polyethylene terephthalate, polytetrafluoroethylene and polyvinylidene fluoride, preferably polyethylene and/or polypropylene.

The conductive carbon material may be those commonly used in the art. In one embodiment, the conductive carbon material is at least one of graphene, graphene oxide, reduced graphene oxide, carbon nanotubes, carbon nanofibers, acetylene black, Super P and Ketjen black, preferably at least one of graphene, graphene oxide and reduced graphene oxide.

In the second aspect, provided in the present disclosure is a method for preparing a composite separator, comprising the steps of:
(1) mixing a molecular sieve and a conductive carbon material to obtain a mixture, wherein the molecular sieve contains cobalt;
(2) dispersing the mixture and a binder in a solvent to obtain a coating slurry;
(3) coating the coating slurry on the surface of a polymer substrate film, and then removing the solvent, to obtain the composite separator.

In one embodiment, cobalt is present in the molecular sieve in an amount of 1-30 wt%, preferably 1-15 wt%, more preferably 2-7 wt%, on element cobalt basis, and based on the total weight of cobalt and the molecular sieve. In one embodiment, the method may further comprise: obtaining the molecular sieve by: adding a cobalt ion solution to a raw molecular sieve, and subjecting to drying and reducing, to obtain a cobalt containing molecular sieve.

In one embodiment, the molecular sieve may further contain lithium. Preferably, lithium is present in the molecular sieve in an amount of 0.1-5 wt%, preferably 0.2-3 wt%, more preferably 0.5-2.5 wt%, on lithium ion basis, and based on the total weight of lithium and the molecular sieve. In one embodiment, the method may further comprise: obtaining the molecular sieve by:
S1, exchanging a raw molecular sieve with a lithium ion solution, and subjecting to washing and drying, to obtain a precursor I; and
S2, adding a cobalt ion solution to the precursor I, and subjecting to drying and reducing, to obtain the molecular sieve which contains cobalt and lithium.

Preferably, the lithium ion solution is at least one selected from the group consisting of a lithium chloride solution, a lithium sulfate solution, and a lithium nitrate solution.

Preferably, the exchanging is operated at conditions including: a temperature of 40-100 °C , and a liquid-to-solid ratio of 10-50. The exchanging may be operated once or more times, for example, 1-3 times.

Preferably, the cobalt ion solution is at least one selected from the group consisting of cobalt chloride solution, cobalt nitrate solution, cobalt sulfate solution and cobalt acetate solution.

Preferably, the reducing is operated under a hydrogen atmosphere at a temperature of 600-750°C for 1-4h.

Preferably, the raw molecular sieve may have a chemical composition of xM₂O•ySiO₂•zAl₂O₃, wherein 0.01≤x/y≤0.2, 10≤y/z≤50; and M is one or two selected from the group consisting of Na and K. Preferably, the raw molecular sieve is a Na-type molecular sieve wherein M is Na.

Preferably, the raw molecular sieve is at least one selected from the group consisting of MFI, MWW, GIS, BEC, FAU and MOR, preferably at least one selected from the group consisting of MFI, MWW and GIS.

In one embodiment, the molecular sieve in step (1) may have at least one topological structure selected from the group consisting of MFI, MWW, GIS, BEC, FAU and MOR; preferably at least one topological structure selected from the group consisting of MFI, MWW and GIS.

The solvent in step (2) may be those commonly used in the art. In one embodiment, the solvent in step (2) may be at least one selected from the group consisting of deionized water, anhydrous ethanol, N,N-dimethylacetamide, N,N-dimethylformamide, dimethyl sulfoxide and N-methylpyrrolidone, preferably N-methylpyrrolidone.

The binder in step (2) may be those commonly used in the art. In one embodiment, the binder in step (2) may be at least one of polyvinyl alcohol, carboxymethyl cellulose, polyvinylidene fluoride, polytetrafluoroethylene, polyvinyl pyrrolidone, styrene-butadiene rubber and polyacrylate, preferably polyvinylidene fluoride.

The coating in step (3) may be those commonly used in the art. In one embodiment, the coating in step (3) is at least one of casting, blade coating, spray coating and spin coating, preferably blade coating.

In the third aspect, provided in the present disclosure is use of the above composite separator in lithium-sulfur batteries.

In the fourth aspect, provided in the present disclosure is a lithium-sulfur battery comprising a cathode, an anode and the above composite separator between the cathode and the anode. The lithium-sulfur battery may further comprise an electrolyte. The cathode, the anode and the electrolyte may be selected from various cathodes, anodes and electrolytes used in lithium-sulfur batteries as known to those skilled persons in the art.

The composite separator in accordance with the present disclosure comprises a molecular sieve containing cobalt and optionally lithium in the composite layer. When used in a lithium-sulfur battery, the pore structure of the molecular sieve can effectively limit the migration and diffusion of Li₂Sₓ via physical barrier effects, thereby reducing side reactions inside the battery. The molecular sieve in accordance with the present disclosure contains cobalt. The introduced cobalt can not only improve the conductivity of the cathode side of the separator, but also serve as an active site to enhance the kinetics of the conversion of polysulfides. In the case where the molecular sieve further contains lithium, the introduced lithium can provide a large number of sites for adsorbing and transferring lithium ions during the battery cycle, thereby improving the lithium ion transfer performance of the separator. More importantly, when the molecular sieve contains both lithium and cobalt, a synergistic effect is achieved in the resulting composite separator, which can greatly improve the rate performance and cycle stability of the lithium-sulfur battery.

The present invention will be described in detail below through examples.

List of raw materials:
MFI molecular sieve, GIS molecular sieve, MWW molecular sieve, and BEC molecular sieve: commercial available from Sigma-Aldrich
Graphene and graphene oxide: commercial available from Shanghai Aladdin Biochemical Technology Co., Ltd.
PVDF, NMP, CMC, DMF, and cobalt chloride: commercial available from Sinopharm Chemical Reagent Co., Ltd.

### Methods for testing

### Assembling of lithium-sulfur battery samples:

A cathode was firstly prepared by: mixing sublimation sulfur as the active material, Ketjen black as the conductive agent, and polyvinylidene fluoride (PVDF) as the binder in a mass ratio of 6:3:1, adding N-methylpyrrolidone (NMP) thereto, to form a cathode slurry, coating the cathode slurry on an aluminum foil and drying, to obtain the cathode. Then, a 2025 button battery was assembled in a glove box under argon atmosphere with water and oxygen content of less than 0.1 ppm by: assembling in order of a cathode shell, a cathode, a separator, a lithium anode, a foam nickel and an anode shell, and adding 100 µL electrolyte. The electrolyte used was a mixed solution containing 1 mol/L lithium bis (trifluoromethylsulfonyl) imide and 0.2 mol/L lithium nitrate in 1,3-dioxolane/ dimethoxyethane (wherein DOL/DME was in a volume ratio of 1:1).

The lithium-sulfur battery samples as prepared above were subjected to constant current charging and discharging tests to detect their rate performances and cycling performances.

### Testing for rate performance

The lithium-sulfur battery samples were subjected to charging and discharging at a voltage range of 1.7-2.7 V and 1 C (1C=1675 mA/g) for 5 cycles. The specific discharge capacity of each charging-discharging cycle was recorded and used in calculating the average specific discharge capacity of the 5 cycles.

The average specific discharge capacity of the 5 cycles at 1C= the sum of the specific discharge capacities from the 1st cycle to the 5th cycle /5
Similarly, the charging and discharging was respectively repeated at 2C and 3C for 5 cycles, and the average specific discharge capacity of the 5 cycles at 2C and 3C was respectively calculated.

### Testing for cycling performance

The lithium-sulfur battery samples were subjected to charging and discharging at a voltage range of 1.7-2.7 V and 0.1C and 0.2C, respectively, for 2 cycles, and subjected to further charging and discharging at 0.5 C for 100 and 150 cycles. The specific discharge capacities of the first cycle at different current densities (i.e. 0.1C, 0.2C and 0.5C) and those of the 100th cycle and the 150th cycle were recorded and used in calculating the capacity retention after 100 or 150 cycles at 0.5 C according to the following formula, so as to characterize the cycling performance. The capacity retention after 100 cycles = the specific discharge capacity of the 100th cycle/the specific discharge capacity of the 1st cycle * 100% The capacity retention after 150 cycles = the specific discharge capacity of the 150th cycle/the specific discharge capacity of the 1st cycle *100%

### With respect to cases wherein the molecular sieve contained lithium and cobalt

### Example 2-1

### The preparation of the composite separator

(1) 5 g of raw molecular sieve (i.e. an MFI molecular sieve having a chemical composition of Na₂O • 20SiO₂ • Al₂O₃) was subjected to ion exchanging with 0.5 mol/L LiCl solution (at a liquid-to-solid ratio of 20) at 80°C for 2 hours, and then centrifuged and washed. The ion exchanging was repeated twice. The obtained sample was dried at 100°C overnight to obtain precursor 1-I.
   2 g of the obtained precursor 1-I was immersed in 18 mL of a 0.1 mol/L cobalt chloride solution, dried at 80°C in air for 8 h, and then treated at 700°C under a hydrogen atmosphere for 2 h, to obtain an MFI molecular sieve containing lithium and cobalt.
(2) 0.35 g of the MFI molecular sieve containing lithium and cobalt and 0.1 g of graphene were subjected to grinding and mixing in a mortar to obtain a mixture;
(3) the mixture and 0.05 g of polyvinylidene fluoride were dispersed in N-methylpyrrolidone, stirred and mixed evenly to obtain a coating slurry;
(4) The coating slurry was evenly coated on one side of a polyethylene/polypropylene substrate film by blade coating, and then dried to remove the solvent, to obtain a composite separator having a composite layer evenly distributed on one side of the polymer substrate film, wherein the composite layer had a thickness of 15 µm.

### Testing of performances of the composite separator

According to the methods for testing mentioned above, the prepared composite separator was used in assembling lithium-sulfur battery samples and testing the samples for their performances. The test results were shown in Table 2-1.

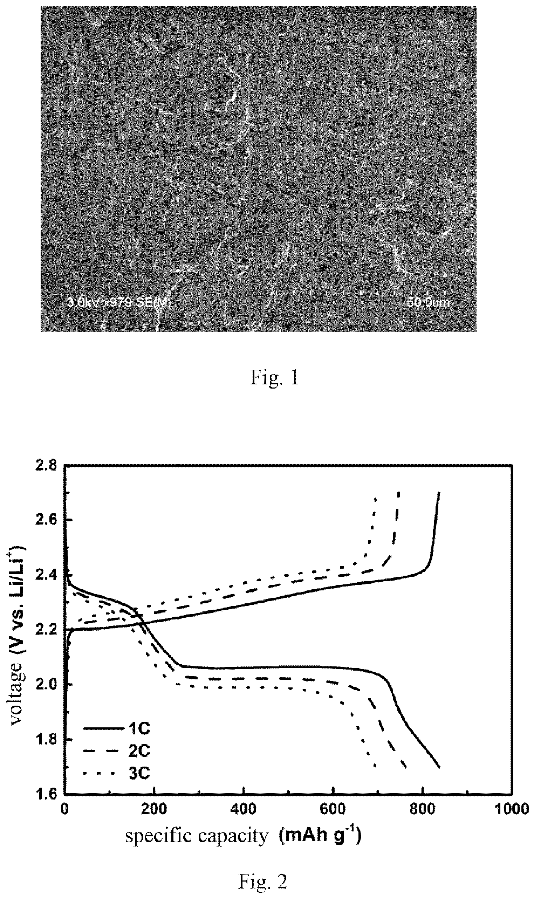

Fig. 1 was a scanning electron microscope image of the composite separator of Example 2-1. As shown in the figure, the composite layer evenly covered the surface of the PP/PE film to form a good barrier layer.
Fig. 2 was the charge and discharge curves of the lithium-sulfur battery sample containing the composite separator of Example 2-1 at different current densities.

### Example 2-2

Example 2-1 was repeated, except that the MFI molecular sieve was replaced with a GIS molecular sieve, to prepare a GIS molecular sieve containing lithium and cobalt with the same chemical composition. Specifically, 5 g of raw molecular sieve (i.e. a GIS molecular sieve having a chemical composition of Na₂O • 20SiO₂ • Al₂O₃) was subjected to ion exchanging with a 0.5 mol/L LiCl solution (at a liquid-to-solid ratio of 20) at 80°C for 2 hours, and then centrifuged and washed. The ion exchanging was repeated twice. The obtained sample was dried at 100°C overnight to obtain the precursor 2-I. 2 g of the obtained precursor 2-I was immersed in 18 mL of a 0.1 mol/L cobalt chloride solution, dried at 80°C in air for 8 hours, and then treated at 700°C under a hydrogen atmosphere for 2 hours, to obtain the GIS molecular sieve containing lithium and cobalt.

In addition, the amount of the GIS molecular sieve containing lithium and cobalt was adjusted to 0.6 g, and the thickness of the composite layer was adjusted to 30 µm, to prepare a composite separator.

Example 2-1 was repeated to use the prepared composite separator in assembling lithium-sulfur battery samples and testing the samples for their performances. The test results were shown in Table 2-1.

### Example 2-3

Example 2-1 was repeated, except that the MFI molecular sieve was replaced with an MWW molecular sieve, to prepare an MWW molecular sieve containing lithium and cobalt with the same chemical composition. Specifically, 5 g of raw molecular sieve (i.e. an MWW molecular sieve having a chemical composition of Na₂O•20SiO₂•Al₂O₃) was subjected to ion exchanging with a 0.5 mol/L LiCl solution (at a liquid-to-solid ratio of 20) at 80°C for 2 hours, and then centrifuged and washed. The ion exchanging was repeated twice. The obtained sample was dried at 100°C overnight to obtain the precursor 3-I. 2 g of the obtained precursor 3-I was immersed in 18 mL of a 0.1 mol/L cobalt chloride solution, dried at 80°C in air for 8 hours, and then treated at 700°C under a hydrogen atmosphere for 2 hours, to obtain the MWW molecular sieve containing lithium and cobalt.

In addition, the amount of the MWW molecular sieve containing lithium and cobalt was adjusted to 0.9 g, and the thickness of the composite layer was adjusted to 40 µm, to prepare a composite separator.

Example 2-1 was repeated to use the prepared composite separator in assembling lithium-sulfur battery samples and testing the samples for their performances. The test results were shown in Table 2-1.

### Example 2-5

Example 2-1 was repeated, except that the amount of the MFI molecular sieve containing lithium and cobalt was adjusted to 1 g.

Example 2-1 was repeated to use the prepared composite separator in assembling lithium-sulfur battery samples and testing the samples for their performances. The test results were shown in Table 2-1.

### Example 2-6

Example 2-1 was repeated, except that the thickness of the composite layer was adjusted to 50 µm.

Example 2-1 was repeated to use the prepared composite separator in assembling lithium-sulfur battery samples and testing the samples for their performances. The test results were shown in Table 2-1.

### Example 2-7

Example 2-1 was repeated, except that the MFI molecular sieve having the chemical composition of Na₂O•20SiO₂•Al₂O₃ was replaced with an MFI molecular sieve having a chemical composition of 2Na₂O•5SiO₂•Al₂O₃, to prepare an MFI molecular sieve containing lithium and cobalt.

Example 2-1 was repeated to use the prepared composite separator in assembling lithium-sulfur battery samples and testing the samples for their performances. The test results were shown in Table 2-1.

### Comparative Example 2-1

Example 2-1 was repeated, except that the MFI molecular sieve containing lithium and cobalt was replaced with the raw MFI molecular sieve.

Example 2-1 was repeated to use the prepared composite separator in assembling lithium-sulfur battery samples and testing the samples for their performances. The test results were shown in Table 2-1.

### Comparative Example 2-2

Example 2-1 was repeated, except that the MFI molecular sieve was replaced with a 13X molecular sieve, to prepare a 13X molecular sieve containing lithium and cobalt with the same chemical composition.

Example 2-1 was repeated to use the prepared composite separator in assembling lithium-sulfur battery samples and testing the samples for their performances. The test results were shown in Table 2-1.

### Comparative Example 2-3

Example 2-1 was repeated, except that the MFI molecular sieve was replaced with an SAPO-34 molecular sieve, to prepare an SAPO-34 molecular sieve containing lithium and cobalt with the same chemical composition.

Example 2-1 was repeated to use the prepared composite separator in assembling lithium-sulfur battery samples and testing the samples for their performances. The test results were shown in Table 2-1.

### Comparative Example 2-4

Example 2-1 was repeated, except that the MFI molecular sieve containing lithium and cobalt was replaced with the precursor 1-I, to prepare a composite separator.

Example 2-1 was repeated to use the prepared composite separator in assembling lithium-sulfur battery samples and testing the samples for their performances. The test results were shown in Table 2-1.

**Table 2-1 results of the tested lithium-sulfur battery samples**

| | Average specific charge capacity at 1C (mAh/g) | Average specific charge capacity at 2C (mAh/g) | Average specific charge capacity at 3C (mAh/g) | Capacity retention after 150 cycles at 0.5C (%) |
|---|---|---|---|---|
| Ex. 2-1 | 836 | 745 | 695 | 90 |
| Ex. 2-2 | 820 | 731 | 683 | 88 |
| Ex. 2-3 | 818 | 726 | 675 | 87 |
| Ex. 2-5 | 753 | 662 | 619 | 75 |
| Ex. 2-6 | 775 | 691 | 654 | 85 |
| Ex. 2-7 | 740 | 651 | 612 | 71 |
| CE. 2-1 | 690 | 600 | 550 | 64 |
| CE. 2-2 | 711 | 629 | 588 | 66 |
| CE. 2-3 | 705 | 614 | 575 | 67 |
| CE. 2-4 | 768 | 669 | 632 | 82 |

### With respect to cases wherein the molecular sieve contains cobalt

### Example 3-1

(1) 2 g of raw molecular sieve (i.e. an MFI molecular sieve having a chemical composition of Na₂O•20SiO₂•Al₂O₃) was immersed in 18 mL of a 0.1 mol/L cobalt chloride solution, dried at 80°C in air for 8 hours, and then treated at 700°C under a hydrogen atmosphere for 2 hours, to obtain an MFI molecular sieve containing cobalt.
(2) 0.35 g of the MFI molecular sieve containing cobalt and 0.1 g of graphene were subjected to grinding and mixing in a mortar to obtain a mixture;
(3) the mixture and 0.05 g of polyvinylidene fluoride were dispersed in N-methylpyrrolidone, stirred and mixed evenly to obtain a coating slurry;
(4) the coating slurry was evenly coated on one side of a polyethylene/polypropylene substrate film by blade coating, and then dried to remove the solvent, to obtain a composite separator having a composite layer evenly distributed on one side of the polymer substrate film, wherein the composite layer had a thickness of 15 µm.

According to the methods for testing mentioned above, the prepared composite separator was used in assembling lithium-sulfur battery samples and testing the samples for their performances. The test results were shown in Table 3-1.

### Example 3-2

Example 3-1 was repeated, except that the MFI molecular sieve was replaced with a GIS molecular sieve, to prepare a GIS molecular sieve containing cobalt with the same chemical composition. Specifically, 2 g of raw molecular sieve (i.e. a GIS molecular sieve having a chemical composition of Na₂O•20SiO₂•Al₂O₃) was immersed in 18 mL of a 0.1 mol/L cobalt chloride solution, dried at 80°C in air for 8 hours, and then treated at 700°C under a hydrogen atmosphere for 2 hours, to obtain the GIS molecular sieve containing cobalt.

In addition, the amount of the GIS molecular sieve containing cobalt was adjusted to 0.6 g, and the thickness of the composite layer was adjusted to 30 µm, to prepare a composite separator.

Example 3-1 was repeated to use the prepared composite separator in assembling lithium-sulfur battery samples and testing the samples for their performances. The test results were shown in Table 3-1.

### Example 3-3

Example 3-1 was repeated, except that the MFI molecular sieve was replaced with an MWW molecular sieve, to prepare an MWW molecular sieve containing cobalt with the same chemical composition. Specifically, 2 g of raw molecular sieve (i.e. an MWW molecular sieve having a chemical composition of Na₂O•20SiO₂•Al₂O₃) was immersed in 18 mL of a 0.1 mol/L cobalt chloride solution, dried at 80°C in air for 8 hours, and then treated at 700°C under a hydrogen atmosphere for 2 hours, to obtain the MWW molecular sieve containing cobalt.

In addition, the amount of the MWW molecular sieve containing cobalt was adjusted to 0.9 g, and the thickness of the composite layer was adjusted to 40 µm, to prepare a composite separator.

Example 3-1 was repeated to use the prepared composite separator in assembling lithium-sulfur battery samples and testing the samples for their performances. The test results were shown in Table 3-1.

### Example 3-4

Example 3-1 was repeated, except that the amount of the MFI molecular sieve containing cobalt was adjusted to 1 g.

Example 3-1 was repeated to use the prepared composite separator in assembling lithium-sulfur battery samples and testing the samples for their performances. The test results were shown in Table 3-1.

### Example 3-5

Example 3-1 was repeated, except that the thickness of the composite layer was adjusted to 50 µm.

Example 3-1 was repeated to use the prepared composite separator in assembling lithium-sulfur battery samples and testing the samples for their performances. The test results were shown in Table 3-1.

### Example 3-6

Example 3-1 was repeated, except that the MFI molecular sieve having the chemical composition of Na₂O•20SiO₂•Al₂O₃ was replaced with an MFI molecular sieve having a chemical composition of 2Na₂O•5SiO₂•Al₂O₃, to prepare an MFI molecular sieve containing cobalt.

Example 3-1 was repeated to use the prepared composite separator in assembling lithium-sulfur battery samples and testing the samples for their performances. The test results were shown in Table 3-1.

**Table 3-1 results of the tested lithium-sulfur battery samples**

| | Average specific charge capacity at 1C (mAh/g) | Average specific charge capacity at 2C (mAh/g) | Average specific charge capacity at 3C (mAh/g) | Capacity retention after 150 cycles at 0.5C (%) |
|---|---|---|---|---|
| Ex. 3-1 | 776 | 685 | 636 | 80 |
| Ex. 3-2 | 760 | 671 | 626 | 79 |
| Ex. 3-3 | 749 | 658 | 615 | 78 |
| Ex. 3-4 | 723 | 632 | 595 | 70 |
| Ex. 3-5 | 740 | 639 | 600 | 75 |
| Ex. 3-6 | 712 | 620 | 582 | 68 |
| CE. 2-1 | 690 | 600 | 550 | 64 |

The preferable embodiments of the present invention have been described in detail above. However, the present invention is not limited thereto. Various simple modifications may be made to the embodiments of the present invention within the technical scope of the present invention, including the combinations of various technical features in any other suitable way. Those simple modifications and combinations should also be regarded as the contents disclosed herein and being within the protection scope of the present disclosure.

## Claims

1. A composite separator, **characterized by** comprising a polymer substrate film and a composite layer disposed on the surface of the polymer substrate film, wherein the composite layer comprises a molecular sieve and a conductive carbon material, wherein the molecular sieve contains cobalt.

2. The composite separator of claim 1, wherein
the composite layer has a thickness of 5-50 µm, preferably 10-40 µm; and/or
the conductive carbon material and the molecular sieve in the composite layer are in a mass ratio of 1:(1-9), preferably 1:(2-9).

3. The composite separator of claim 1 or 2, wherein the molecular sieve further contains lithium;
preferably, lithium is present in the molecular sieve in an amount of 0.1-5 wt%, preferably 0.2-3 wt%, more preferably 0.5-2.5 wt%, on lithium ion basis;
preferably, cobalt is present in the molecular sieve in an amount of 1-30 wt%, preferably 1-15 wt%, more preferably 2-7 wt%, on element cobalt basis.

4. The composite separator of claim 3, wherein the molecular sieve has at least one topological structure selected from the group consisting of MFI, MWW, GIS, BEC, FAU and MOR, preferably at least one topological structure selected from the group consisting of MFI, MWW and GIS.

5. The composite separator of any one of claims 1-4, wherein
the material of the polymer substrate film is at least one of polyethylene, polypropylene, polyimide, polyacrylonitrile, polyethylene terephthalate, polytetrafluoroethylene and polyvinylidene fluoride, preferably polyethylene and/or polypropylene; and/or
the conductive carbon material is at least one of graphene, graphene oxide, reduced graphene oxide, carbon nanotubes, carbon nanofibers, acetylene black, Super P and Ketjen black, preferably at least one of graphene, graphene oxide and reduced graphene oxide.

6. A method for preparing the composite separator of any one of claims 1-5, **characterized by** comprising the steps of:
(1) mixing a molecular sieve and a conductive carbon material to obtain a mixture, wherein the molecular sieve contains cobalt;
(2) dispersing the mixture and a binder in a solvent to obtain a coating slurry;
(3) coating the coating slurry on the surface of a polymer substrate film, and then removing the solvent, to obtain the composite separator.

7. The method of claim 6, wherein the method further comprises: obtaining the molecular sieve by: mixing a cobalt ion solution with a raw molecular sieve, and subjecting to drying and reducing, to obtain a cobalt containing molecular sieve.

8. The method of claim 6, wherein the molecular sieve further contains lithium, and wherein the method further comprises: obtaining the molecular sieve by:
S1, exchanging a raw molecular sieve with a lithium ion solution, and subjecting to washing and drying, to obtain a precursor I; and
S2, mixing a cobalt ion solution with the precursor I, and subjecting to drying and reducing, to obtain the molecular sieve which contains cobalt and lithium.

9. The method of claim 7 or 8, wherein
the lithium ion solution is at least one selected from the group consisting of a lithium chloride solution, a lithium sulfate solution, and a lithium nitrate solution; and/or
the exchanging is operated at conditions including: a temperature of 40-100°C, and a liquid-to-solid ratio of 10-50; preferably, the exchanging is operated 1-3 times; and/or
the cobalt ion solution is at least one selected from the group consisting of cobalt chloride solution, cobalt nitrate solution, cobalt sulfate solution and cobalt acetate solution; and/or
the reducing is operated under a hydrogen atmosphere at a temperature of 600-750°C for 1-4h; and/or
the raw molecular sieve has a chemical composition of xM₂O•ySiO₂• zAl₂O₃, wherein 0.01 ≤x/y≤0.2, 10≤y/z≤50; and M is one or two selected from the group consisting of Na and K, preferably Na; and/or
the raw molecular sieve is at least one selected from the group consisting of MFI, MWW, GIS, BEC, FAU and MOR, preferably at least one of MFI, MWW and GIS.

10. The method of claim 7 or 8, wherein the molecular sieve has at least one topological structure selected from the group consisting of MFI, MWW, GIS, BEC, FAU and MOR; preferably at least one topological structure selected from the group consisting of MFI, MWW and GIS;
preferably, lithium is present in the molecular sieve in an amount of 0.1-5 wt%, preferably 0.2-3 wt%, more preferably 0.5-2.5 wt%, on lithium ion basis;
preferably, cobalt is present in the molecular sieve in an amount of 1-30 wt%, preferably 1-15 wt%, more preferably 2-7 wt%, on element cobalt basis.

11. The method of any one of claims 6-9, wherein
the solvent in step (2) is at least one selected from the group consisting of deionized water, anhydrous ethanol, N,N-dimethylacetamide, N,N-dimethylformamide, dimethyl sulfoxide and N-methylpyrrolidone, preferably N-methylpyrrolidone; and/or
the binder in step (2) is at least one of polyvinyl alcohol, carboxymethyl cellulose, polyvinylidene fluoride, polytetrafluoroethylene, polyvinyl pyrrolidone, styrene-butadiene rubber and polyacrylate, preferably polyvinylidene fluoride; and/or
the coating in step (3) is at least one of casting, blade coating, spray coating and spin coating, preferably blade coating

12. A lithium-sulfur battery, **characterized by** comprising a cathode, an anode and the composite separator of any one of claims 1-5 between the cathode and the anode.
